# EUROPEAN PATENT SPECIFICATION

(11) **EP 1 237 710 B1**
(45) Date of publication and mention of the grant of the patent: **14.04.2004**
(21) Application number: 00989981.6
(22) Date of filing: 13.12.2000
(51) Int. Cl.: B29C 70/88, B29C 70/22

(54) **A REINFORCING STRUCTURE FOR STIFF COMPOSITE ARTICLES**
STÜTZSTRUKTUR FÜR STEIFE VERBUNDBAUTEILE
STRUCTURE DE RENFORCEMENT POUR ARTICLES COMPOSITES RIGIDES

(30) Priority: 15.12.1999 EP 99204339; 15.12.1999 EP 99204338; 15.12.1999 EP 99204340
(43) Date of publication of application: 11.09.2002
(73) Proprietor: N.V. BEKAERT S.A., 8550 Zwevegem (BE)
(72) Inventor: BOESMAN, Peter, B-9820 Merelbeke (BE); DE CLERCQ, Elsie, B-9620 Zottegem (BE); VAN GIEL, Frans, B-8500 Kortrijk (BE)
(86) International application number: PCT/EP2000/012779
(87) International publication number: WO 2001/043951

(56) References cited:
- EP-A- 0 546 962
- DE-A- 2 908 985
- GB-A- 1 174 292
- US-A- 5 998 028
- PATENT ABSTRACTS OF JAPAN vol. 008, no. 132 (M-303), 20 June 1984 (1984-06-20) -& JP 59 033046 A (MITSUBISHI DENKI KK), 22 February 1984 (1984-02-22)

## Description

### Field of the invention.

The invention relates to a reinforcing structure, comprising metallic elements, and the use of such reinforcing structure to reinforce stiff composite articles. The invention further relates to stiff composite articles and a method to provide stiff composite articles.

### Background of the invention.

Reinforcing structure are known to reinforce polymer articles. Often, glass fibers or C-fibers are used to reinforce polymer matrices, providing together a reinforced, eventually shaped article. During forming processes, the bending properties of the polymer matrix are influenced negatively, since the reinforcing structures are difficult to elongate.

Often, metallic filaments or fibers are integrated into composite materials in order to obtain a material that is EMI shielded. As a result of electromagnetic requirements, metallic filaments or fibers with fine diameters of 100 µm or less are used. An example of this can be found in US5089326. It is known in the art that the addition of fine metallic fibers or filaments, usually less than 100µm, does not increase the strength of the composite material.

Metal wires or metal wire textile fabrics are also known as reinforcing structures, e.g. from FR 1290278, EP234463A1, EP546962A1 or EP392904A1. To improve the formability of the composite material, metal wires are preferably provided as knitted fabrics.

### Summary of the invention.

The present invention relates to a reinforcing structure comprising metallic elements. The reinforcing structure can be used to manufacture stiff composite articles, which further comprises a polymer matrix.

It is an object of the present invention to provide a reinforcing structure which comprises a textile fabric, which comprises metallic elements this reinforcing structure has improved bending properties compared to the known wires or wire meshes, and which provide an alternative to the knitted wire structures.

The metallic elements, being part of a textile fabric, are deformed due to their presence in this textile fabric. This deformation is herafter referred to as "textile deformation". In case the textile fabric is a woven fabric, the textile deformation gives the metallic element a wavy shape, due to the inweaving of the metallic element as a warp and/or weft element. In case the textile fabric is a knitted fabric, the textile deformation provides the metallic element with a looped shape, being the shape of the stitches in which the metallic element is transformed during knitting.

According to the invention, the metallic elements have at least one structural deformation, other than the textile deformation. This deformation is referred to hereafter as "structural deformation". Such structural deformation may have an irregular shape, e.g. undulated with a wavelength and/or amplitude, which varies over the length to the metallic element. Preferably however, the metallic element is undulated or spirally shaped in a regular way, with constant parameters over the whole length of the metallic element.

In the scope of the present invention, metallic elements are to be understood as metallic wires, e.g. drawn metallic wires, a bundle of metallic wires, metallic strands or cords.

As subject of the invention, the bending properties of reinforcing structure are improved by integrating metallic elements in the textile fabric, which have an elongation at rupture of more than 3% compared to initial length at rupture. This elongation can even be more than 5% or more than 7%, e.g. more than 10% and most preferentially more than 15% at rupture. According to the invention, this elongation is obtained by the use of a metallic element having structural deformations.

A structural deformation as subject of the invention can be e.g. an undulation. The metallic element, being a wire, strand or cord, is given a form, characterized by a wavelength and an amplitude. This undulated metallic element is essentially comprehended in one plane, parallel to the axis of the metallic element. Another structural deformation can be that e.g. a metallic element has obtained a spiral shape, characterized by a diameter of the spiral and the length of the metallic element, necessary to make a 360° revolution in the spiral shape.

In case the metallic element is undulated, this undulation being the structural deformation, the removal of the structural deformation of the metallic element will lead to an elastic elongation, a plastic elongation, or a combination of both of the metallic element during the forming process, mainly depending on the wavelength of the undulation.

In case a small wavelength is used, e.g. less than 3mm, a higher force will be necessary to elongate the metallic element, so removing the structural deformation, next to the elastic and plastic elongation of the metallic element under load as if there was no structural deformation. The removing of this structural deformation leads to a mainly plastic elongation of the metallic element. When the metallic element is released, the metallic element will not come back to its original undulated form, but will stay elongated to certain extend.

In case a longer wavelength is applied, e.g. more than 3mm or even more than 4.5mm, a lower force is sufficient to stretch the metallic element, so removing to some extend the structural deformation. This leads to a mainly elastic elongation of the metallic element, which is additional to the elastic elongation of the metallic element under low force as if there was no structural deformation. When the metallic element is released, the metallic element will come back to approximately its original undulated form. When higher forces are applied, a plastic elongation of the metallic element itself is found, next to the removal of the remaining structural deformation.

The elongation of the metallic elements being undulated with a large wavelength, can be more than 0.3%, e.g. more than 0.4%, or even more than 0.5%, preferably more than 1% or more, applying a force of 10% of the force at rupture.

In case the metallic element has a spiral shape structural deformation, an identical behavior is obtainable. Depending on the length to make a 360° rotation and the diameter of the spiral, the removal of the structural deformation of the metallic element will lead to an elastic elongation, a plastic elongation or a combination of both of the metallic element during the forming process.

One understands that the elongation due to a removing of the structural deformation, can be either elastic, or plastic or a combination of a plastic and an elastic elongation, depending on the wavelength or the length to make a 360° revolution applied.

Metallic elements, being part of a reinforcing structure as subject of the invention, may have more than one structural deformation, being e.g. undulations or spiral shape structural deformations, superposed one to another.

When a metallic element having two structural deformations, being two undulations of which one has a large wavelength and the second having a short wavelength, is subjected to an elongation force F, a stress-strain curve comprising different successive zones, limited by forces F1, F2, F3 and F4 (F1<F2<F3<F4), is obtained.

For a force F applied less than F1, an elastic elongation is obtained. When a force F larger than F1, but less than F2 is applied, an additional, essentially plastic elongation is added. These elongations can be explained by the mainly removing of the structural deformation with large wavelength.

When the force F is increased to a level between F2 and F3, the additional elongation again is mainly elastic. When F is increased to a level between F3 and F4, the elongation in this zone becomes mainly plastic, until rupture occurs at F4. These two later elongations are mainly explained by the removal of the structural deformation with short wavelength, and the plastic deformation of the metallic element without structural deformation until rupture.

The forces F1, F2 and F3, where the elongation change from elastic to plastic or vice versa, can be adjusted by the wavelength and amplitude of the undulations together with other parameters of the metallic element, such as diameter of wires, alloy and drawing history and eventually strand and cord construction.

In case more than 2 structural deformations are superposed to each other, a similar behavior of the metallic element under load can be obtained.

In case the structural deformations are undulations, the metailic element may either be undulated in one plane parallel to the axis of the metallic element, or the undulations may be provided in different planes, all parallel to the axis of the metallic element.

The same characteristics for metallic elements are found in case one or more structural deformations are spiral shaped structural deformations.

The reinforcing structure may comprise one or more textile fabrics, hereafter also called reinforcing layers. According to the present invention, the metallic elements are present in at least one of the reinforcing layers.

The reinforcing structure is to be understood as all elements, which are used to provide the stiff composite article, next to the polymer matrix.
A person skilled in the art understands that also other materials can be used to provide elements of the reinforcing structure, e.g. glass fiber, C-fiber or mats or woven fabrics out of such materials, in addition to the metallic elements.

An object of the invention is to improve the bending properties and behavior of reinforcing structures comprising metallic elements during a forming process of a stiff composite article, comprising this reinforcing structure and a polymer matrix. During this process, the reinforcing structure and the polymer matrix are subjected to heat and / or pressure in order to obtain a stiff composite article. The forming can be done in one step or may require subsequent steps.

It was found that when a reinforcing structure comprising textile fabrics comprising metallic elements, having a structural deformation, is subjected to a forming process, the force needed to form the stiff composite article is partially used to elongate the metallic element. The force applied will elongate the metallic element by partially removing the structural deformations. This is obtainable because of the elongation at rupture of the metallic elements as indicated above.

A reinforcing structure as subject of the invention may be subjected to a forming process, together with the polymer matrix. This process comprises a heating action to soften the polymer matrix, a forming action to form the softened matrix and the reinforcing structure in a desired form, and a cooling action to stiffen the matrix again.

When a metallic element having more than one structural deformation is used as a part of the reinforcing structure of a stiff composite article, benefits are provided to the bending properties during the forming process on the one hand and to the stiff composite article on the other hand. In case the force F, used to provide a stiff composite article comprising the reinforcing structure is approximately F2, the bending properties of the reinforcing structure are improved by the elastic and plastic elongation provided by the elongation zones below F2. However, when the stiff composite article is subjected to an impact force, e.g. a force between F2 and F3, the stiff composite article will be able to absorb the impact energy in a reversible change of its shape. This because mainly the reinforcing structure will stretched under an essentially elastic elongation.

Such forming processes, in which the reinforcing structure and the polymer matrix are subjected to heat and/or pressure in order to form a stiff composite article, may comprise one or subsequent steps.
First, polymer material, to be used as polymer matrix in the stiff composite article, is added to the reinforcing structure. E.g. a textile fabric comprising metallic element having at least one structural deformation is laminated between two or more polymer layers. Eventually, other elements of the reinforcing structure are added before or during laminating. An alternative is to extrude polymer material around the textile fabric, comprising the metallic elements, having at least one structural deformation. This combination of polymer material and reinforcing structure comprising metallic elements is subjected to a forming process.
Such a forming process could be e.g. press-forming, flow moulding, thermofolding or membrane forming.

In a press-forming operation (stamping), a reinforcing structure and the polymer matrix are heated to processing temperature and stamped to shape in a two-part-tool under pressure to provide a stiff composite article.
In a flow moulding operation, the reinforcing structure and the polymer matrix are heated to processing temperature and placed in a two-part-tool and then under pressure. The mould cavity is filled by polymer matrix flowing into every recess of the mould, so providing a stiff composite article.
In a thermofolding operation the reinforcing structure and the polymer matrix are heated locally and folded to provide a stiff composite article. In a membrane forming operation an autoclave pressure is used to drape the preheated reinforcing structure and the polymer matrix over a tool, providing a stiff composite article.

Further, the presence of metallic elements in the matrix during bending operations improves the heat distribution throughout the whole matrix. Since the metallic elements have a high thermal and electric conductivity. This leads to shorter cycle times compared to composite materials with other reinforcing structures, not comprising metallic elements such as glass fibers or carbon fibers.

The metallic elements can be woven, knitted or braided together with polymer filaments, yams or polymer tapes into one and the same fabric. Another alternative is provided by coating the wires, strands or cords with a polymer coating before they are transformed into the fabric. One understands that, next to the structural deformation of the metallic elements, also the nature of the textile fabric itself may contribute to the elongation properties of the total reinforcing structure. To further improve the bending properties of the reinforcing structure, the fabric itself may be undulated.

Another alternative is provided by providing a polymer coating around the metallic elements, preferably before they are given the structural deformation after which they are used to provide a textile fabric. E.g. polymer material is extruded around the metallic element. Such polymer coating helps to improve the adhesion between the metallic elements of the reinforcing structure and the polymer matrix.

Any stiff thermoplastic material can be used as a polymer matrix. A thermoplastic material has to be considered as any thermoplast and any thermoplastic elastomer.
Examples of suitable thermoplastic materials are : polyethylene (PE), polypropylene (PP), polystyrene (PS), polyethylene terephthalate (PET), polyethylene napthalate (PEN), polybuteen terephthalate (PBT) polyvinylchloride (PVC), polyamide (PA) , polyester (PES), polyimide (PI), polycarbonate (PC) , styrene acrilonitryl (SAN), acrylonitril-butadiene-styrene (ABS), thermoplastic polyurethane (TPU), thermoplastic polyolefins (TPO), thermoplastic copolyetheresters , copolymers of these polymers or similar materials.
These polymer matrices could be defined by a Young's modulus of more than 10⁷ Pa, preferably between 10⁸Pa and 5*10⁹Pa. The Young's modulus is measured at the origin of the stress-strain curve of the polymer at ambient temperatures.

A similar stiff composite article can be obtained by using thermoset polymers by forming the reinforcing structure without polymer matrix, and adding the thermoset matrix, being the polymer matrix, to the formed reinforcing structure by e.g. injection molding.

When strands or cords are used in the reinforcing structure, preference is to be given to those strands or cords, which have a large and rough surface so as to increase the mechanical anchoring in the matrix. Examples are 3x3 and 7x3 cords, preferred to single stranded cords.

To improve the corrosion resistance of the metallic elements, the metallic elements can be coated with a metallic coating layer such as zinc or a zinc alloy such as brass. A suitable zinc alloy is an alloy comprising 2 to 10 % Al and 0.1 to 0.4 % of a rare earth element such as La and/or Ce.

In order to assure a good adhesion between the metallic and the thermoplastic material, an adhesion promoter can be applied on the metallic element.
Possible adhesion promoters are bifunctional coupling agents such as silane compounds. One functional group of these coupling agents is responsible for the binding with the metal or metal oxides; the other functional group reacts with the polymer.
More details about these coupling agents can be found in the PCT application WO-A-99/20682.
Other suitable adhesion promoters are aluminates, zirconates or titanates.

Wires used as metallic element as such or comprised in a strand or cord may have various cross-sections and geometries, e.g. circular, oval or flat.
Within the range of wires, strands and cords, a large variety of materials can be used, dependent on the required mechanical strength. Wires used as such or comprised in a strand or cord, can have a diameter of 0.04mm to 1.0 mm, preferably between 0.1mm and 0.4mm, e.g. 0. 15mm, 0.175mm or 0.3mm.

Wires having structural deformations may also be used to provide a strand or cord. These strands or cords may form part of the reinforcing structure.

Any metal can be used to provide the metallic elements. Preferably alloys such as high carbon steel alloys or stainless steel alloys are used.

When steel wire is used, the tensile strength of the steel wires ranges from 1500 N/mm² to 3000 N/mm² and even more, and is mainly dependent upon the composition of the steel and the diameter.

Also other parameters of a strand or cord, such as the construction of the strand or cord, the number of wires and the diameters of each wire comprised in a strand or cord, the force at rupture of each wire comprised in the strand or cord, can be chosen to provide the required mechanical properties such as strength and elongation at rupture.

### Brief description of the drawings.

The invention will now be described into more detail with reference to the accompanying drawings wherein
- FIGURE 1 shows a woven textile fabric as known in the prior art.
- FIGURE 2 shows a schematic view of a woven textile fabric, to be part of a reinforcing structure as subject of the invention.
- FIGURE 3 shows an undulated metallic element.
- FIGURE 4 shows stress strain curves of undulated metallic elements.
- FIGURE 5 shows a metallic element, having two undulations superposed to each other.
- FIGURE 6 shows a stress-strain curve of an undulated metallic element as shown in FIGURE 5.
- FIGURE 7 shows a woven textile fabric, used as a reinforcing structure as subject of the invention.
- FIGURE 8 shows a knitted textile fabric, used as a reinforcing structure as subject of the invention.
- FIGURE 9, 10, 11 and 12 shows alternative woven textile fabrics, used as a reinforcing structure as subject of the invention.

### Description of the preferred embodiments of the invention.

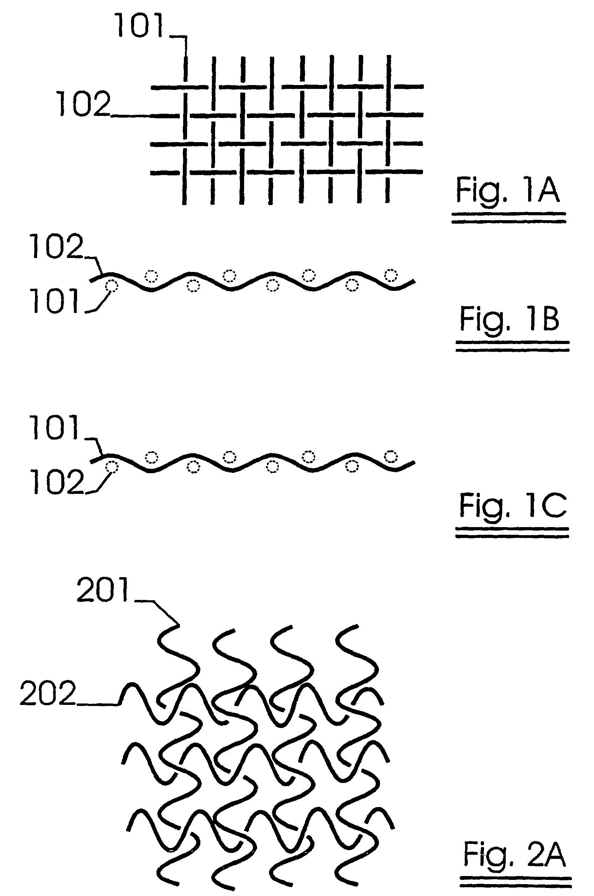

FIGURE 1A shows a woven textile fabric as known in prior art, comprising metallic elements, being wires. Such textile fabric is known as a reinforcing structure. This fabric comprises warp elements 101 and weft elements 102. In FIGURE 1B, a section parallel to the weft direction shows the textile deformation of weft elements 102. This textile deformation, due to the presence of the wire in the woven textile structure has the shape of an undulation. The undulation has a warp element 101 in each concave side of the undulations wave. In FIGURE 1C, a section parallel to the warp direction shows the deformation of warp elements 101. This textile deformation, due to the presence of the wire in the woven textile structure has the shape of an undulation. The undulation has a weft element 102 in each concave side of the undulations wave.

When such fabric, as known in prior art, is subjected to an elongating force, either in warp or weft direction, the metallic element present in the concave side of the textile deformation prevents the textile deformation (in this case undulation) to be removed.

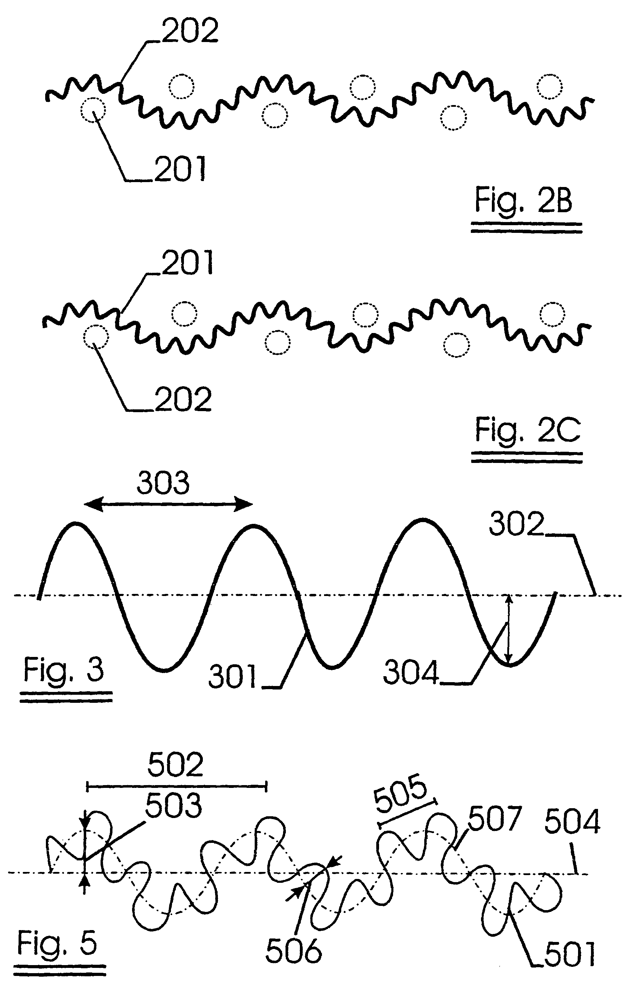

A woven textile fabric, being part of a reinforcing structure as subject of the invention is shown in FIGURE 2A. This woven textile fabric also comprises warp elements 201 and weft elements 202. However, the difference between this embodiment of the present invention and the textile fabric as shown in FIGURE 1 is clearly noticed in FIGURE 2B and 2C. FIGURE 2B and FIGURE 2C is a view of a section of the fabric of FIGURE 2A, in weft respectively warp direction. FIGURE 2B clearly shows that weft element 202 has a structural deformation (in this embodiment a second undulation), next to the deformation due to the presence in the textile fabric. FIGURE 2C shows the same presence of a second undulation, being a structural deformation, next to the deformation, due to the presence of the metallic element in the textile fabric, in this case of the warp element 201.

Similar as the known fabric in figure 1, the textile deformation cannot be removed due to the presence of a metallic element in the concave side. The fabric however can elongate easily due to the fact that the structural deformation may be removed.

FIGURE 3 shows a side view of a structurally deformed, undulated wire 301, which is according to the invention to be integrated in a textile fabric. The wire has its original axis 302, to which it is undulated in one plane with a wavelength 303 and amplitude 304. For this embodiment, a wire diameter of 0.3mm is chosen.

Different embodiments of an undulated wire were provided, having characteristics as shown in the table underneath.

| Sample | Wire diameter | Wavelength | amplitude |
|---|---|---|---|
| Sample A | 0.3mm | 6.199mm | 0.867mm |
| Sample B | 0.3mm | 5.579mm | 0.964mm |
| Sample C | 0.3mm | 2.988mm | 0.696mm |
| Sample D | 0.3mm | 0mm | 0mm |

All other characteristics are identical for the four samples. Sample A, B and C were provided using the wire of sample D.

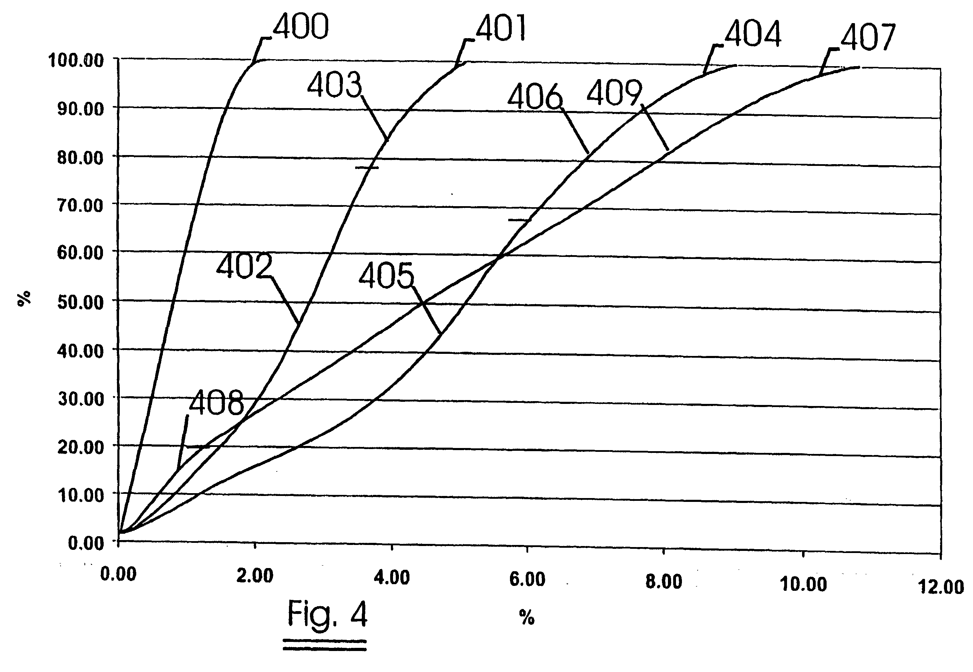

FIGURE 4 shows the stress strain curves of sample A, B, C and D. In abscissa, the elongation compared to the length at start is shown. The ordinate shows the force applied compared to the total force at rupture.

Compared to the curve 400 of the not structural deformed wire of sample D, it is clear that by introducing a structural deformation, a significant larger elongation is obtainable. Since this structural deformation is the only difference between the four samples, the different elongation has to be caused by the structural deformation.

For sample A, the stress strain curve 401 shows that the major part of the elongation is found in the essentially elastic deformation zone 402 of the curve, whereas only a smaller part of the elongation is found in the plastic deformation zone 403.

Same observation can be made for the stress-strain curve 404 of sample B. A major part of the elongation is found in the elastic deformation zone 405, compared to the elongation provided by the plastic deformation zone 406. Both samples have a rather large wavelength and it was found that the removal of the structural deformation was obtained by an essentially elastic elongation.

For sample C, the stress-strain curve 407 shows that only a small elastic elongation can be found in the elastic deformation zone 408, compared to the large elongation in the plastic deformation zone 409. The removing of the structural deformation for these rather short wavelengths is essentially obtained by a plastic elongation.

Elongation more than 4%, e.g. 5%, 9% or even 11 % are obtained. At 10% of the force at rupture, already a large elongation is found for metallic element with structural deformation compared to the elongation at 10% of force at rupture of a not structural deformed wire. This elongation at low forces is improved using large wavelengths.

Other embodiments can be obtained by applying different undulated wires such as wires with other diameter, alloy, wavelength, amplitude or undulation forms. Even cords and strands, being undulated, e.g. parallel to the strand or cord axis are to be understood in the scope of the invention.

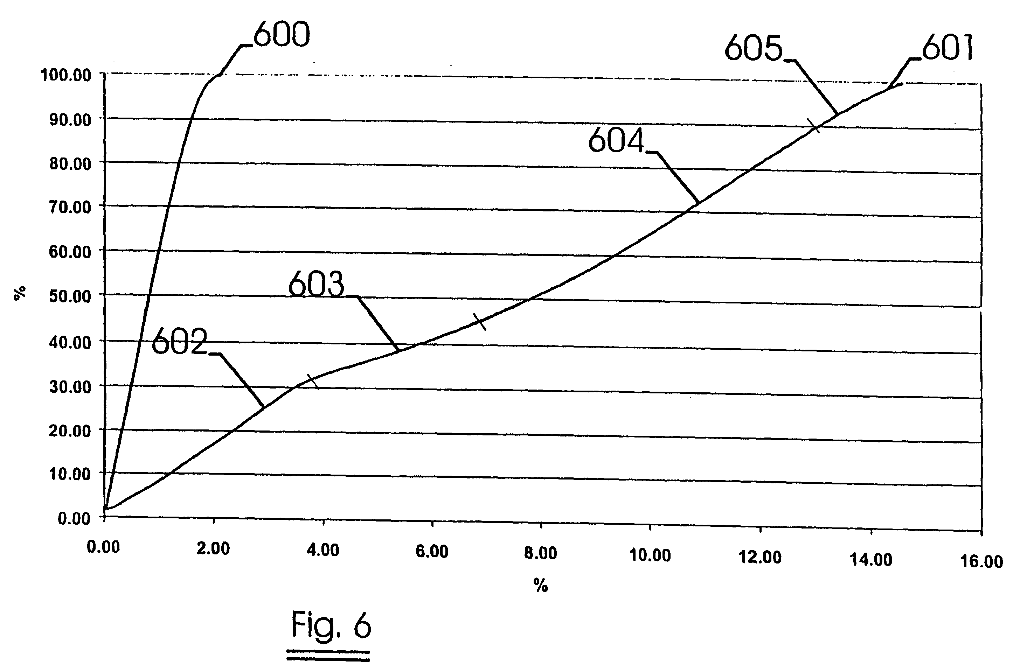

Another embodiment is obtainable using metallic element with more than one structural deformation superposed to each other. In FIGURE 5 a wire 501 is shown, having 2 undulations superposed to each other. The two undulations are provided in the same plane. According to the invention, this wire is to be integrated in a textile fabric.

A first undulation, characterized with a large wavelength 502 and amplitude 503, compared to the axis 504 of the wire as if there was no such undulation, is superposed to an undulation with short wavelength 505 and amplitude 506 compared to the axis 507 of the wire as if there was no such undulation.

An embodiment was provided with characteristics as in the table underneath :

| Sample | Wire diameter | Wavelength 502 | Amplitude 503 | Wavelength 505 | Amplitude 506 |
|---|---|---|---|---|---|
| Sample E | 0.3mm | 5.034mm | 1.124mm | 2.988mm | 0.696mm |

FIGURE 6 shows the stress strain curves of sample E. In abscissa, the elongation compared to the length at start is shown. The ordinate shows the force applied compared to the total force at rupture.

Compared to the curve 600 of the not structural deformed wire of sample D, it is clear that by introducing structural deformations, a significant larger elongation is obtainable. Since this structural deformation is the only difference between sample E and the reference wire sample D, the different elongation has to be caused by the structural deformation.

For sample E, curve 601 shows 4 zones. In zone 602, the elongation obtained is essentially elastic. Zone 603 provided an additional elongation which is mainly plastic, whereas zone 604 provides an elongation which is again more elastic. Zone 605 provides a plastic elongation until rupture occurs.

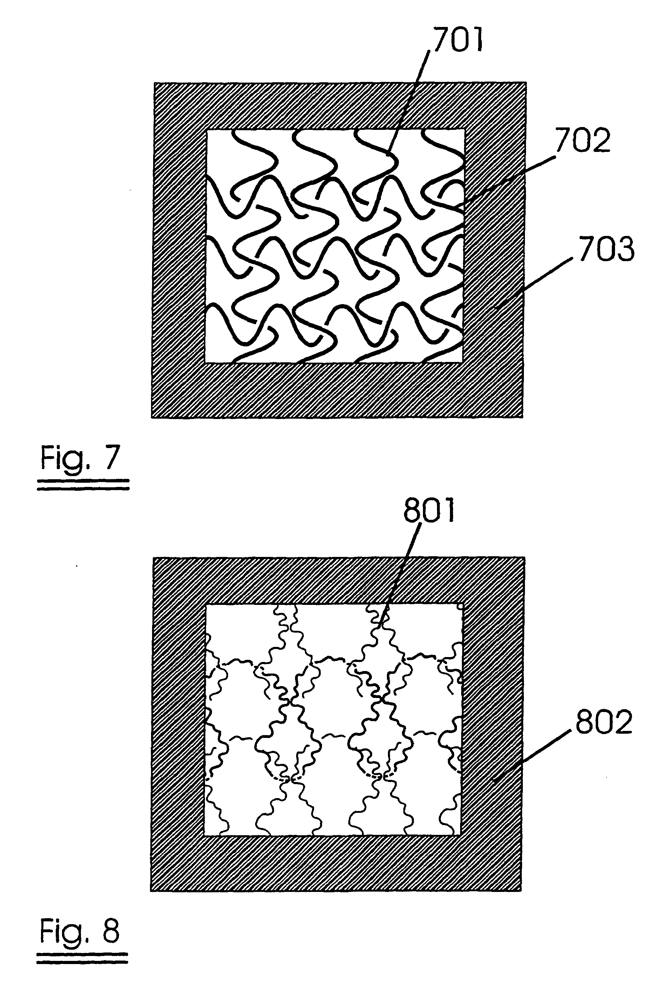

A stiff composite article comprising a reinforcing structure with a woven textile fabric as subject of the invention is shown in FIGURE 7. Undulated wires 701 in warp direction and 702 in weft direction are undulated, so having a structural deformation next to the deformation they obtained by being woven into a woven fabric. A stiff composite article may be obtained when a polymer matrix 703 is provided to the reinforcing structure, e.g. by laminating polymer sheets under increased temperature to both sides of the reinforcing structure. By applying heat and/or pressure, the polymer matrix 703 adheres to the reinforcing structure. Possibly, the stiff composite article is given its final form at the same time. Alternatively, a planar stiff composite article is provided, which may be deformed to a final shape later in a separate operation applying heat and/or pressure to the planar stiff composite article.

Another stiff composite article is shown in FIGURE 8. Structurally deformed wires 801 are knitted into a knitted structure. The wires 801 are structurally deformed in an irregular undulated shape. A polymer matrix 802 is provided to the reinforcing structure. One understands that the knitting pattern ma be chosen to improve even more the elongating properties of the reinforcing structure. The metallic elements, next to the undulation which is a structural deformation, are deformed due to their presence in a textile knitted fabric. They are shaped to form loops, being the stitches of the fabric. Alternatively however, the metallic elements may be used to form tuck stitches or inlays.

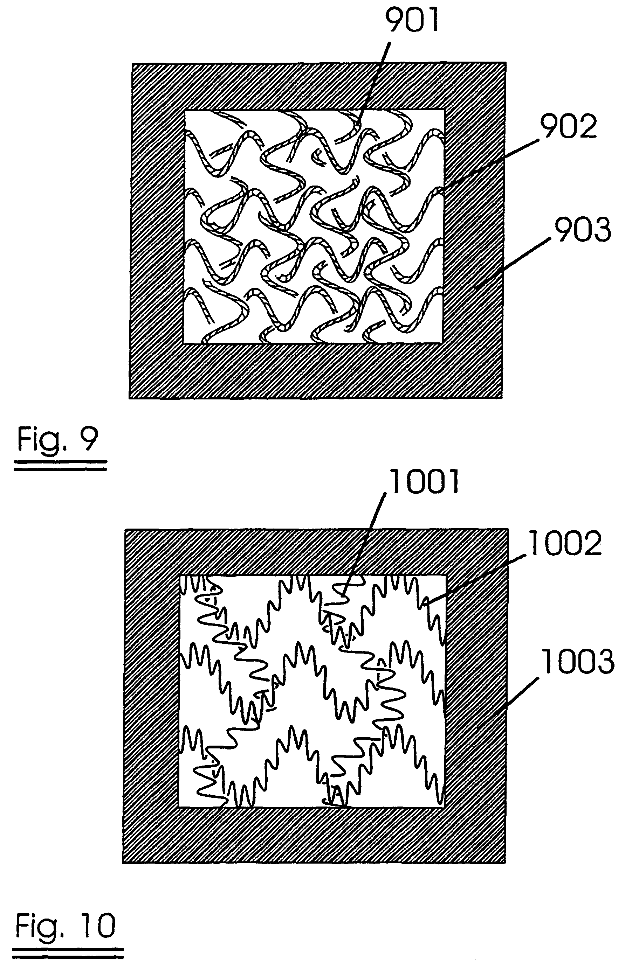

An alternative embodiment as subject of the invention is shown in FIGURE 9, where steel cord 901 and 902, being structurally deformed since they are undulated, are used to provide a woven fabric, both in warp and weft direction. A polymer matrix 903 is additionally provided and adheres via heat and/or pressure to the reinforcing structure, so providing a planar stiff composite article.

Another reinforcing structure is shown in FIGURE 10. Wires 1001 and 1002, each having two undulations superposed to each other, are comprised in a woven fabric as warp and weft. A polymer matrix 1003 is additionally provided and adheres via heat and/or pressure to the reinforcing structure, so providing a planar stiff composite article.

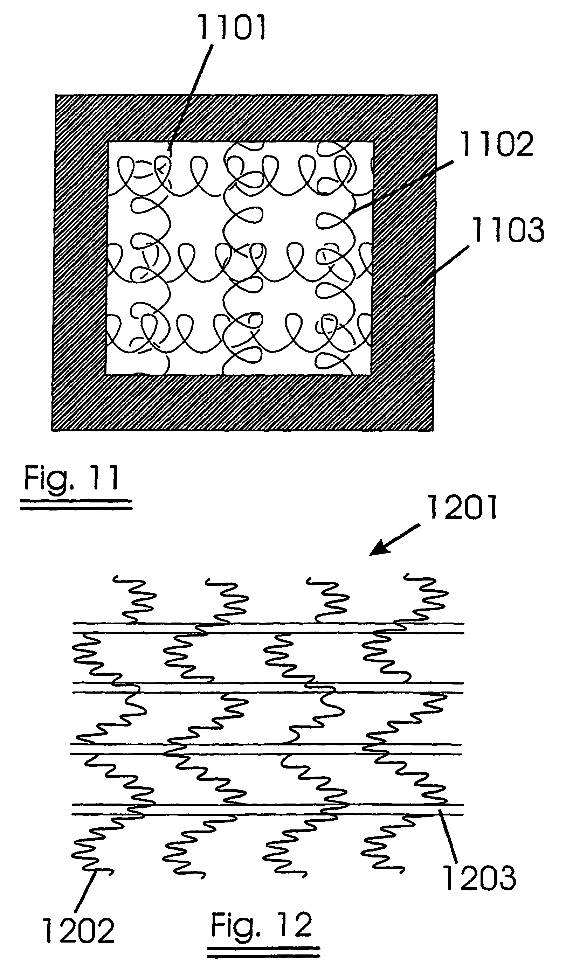

Another stiff composite article is shown in FIGURE 11. Spirally shaped wires 1101 and 1102 are used as warp and weft so providing a woven fabric. A polymer matrix 1103 is additionally provided and adheres via heat and/or pressure to the reinforcing structure, so providing a planar stiff composite article.

Another reinforcing structure, to be used to provide a stiff composite article as subject of the invention, being a textile woven fabric 1201 is shown in FIGURE 12, comprising undulated wires as metallic element 1202. Metallic elements 1202 are present in warp or weft direction on the woven fabric, whereas the other direction of the woven fabric, being the weft respectively the warp, is provided using polymer filaments 1203. These filaments may be made from the same or a different polymer as the polymer matrix of the stiff composite article. Alternatively, some polymer material can be present as coating on the metallic elements or on a number of metallic elements to form strips.
The total volume of the thermoplastic material present as filament and/or as coating may even be more than 40 % of the total volume of the woven fabric.
Alternatively, the polymer filament 1203 may be replaced by polymer tapes, having a width preferably in the range of 1 to 10 mm and a thickness preferably between 20 and 300 µm.
A reinforcing structure may comprise one or more reinforcing layers, each layer being such a textile fabric as described above.

For all embodiments, it was found that the adhesion between metallic element and polymer matrix could be influenced by a coating of the metallic element. For PA-matrices, a brass, zinc or zinc alloy coating on the metallic element can improve the adhesion between polymer matrix and metallic element. A possible zinc alloy is an alloy comprising 2 to 10% Al and 0.1 to 0.4% of a rare earth element such as La and/or Ce.

Further improvement for the adhesion can be obtained by applying adhesion promoters such as silane compounds, aluminates, zirconates or titanates.

It is clear that other embodiments are obtained by using other polymer matrices such as PE, PP, PS, PET, PEN, PBT, PVC, PA, PI, PC, SAN, ABS, TPU, TPO, thermoplastic copolyetheresters, copolymers of these polymers or similar materials. Each of the embodiments are influenced in a similar way as far as the coatings or the use of adhesion promoters is concerned.

A person known in the art understands that for all embodiments, the alloy type of the metal used, the diameters, section shapes and other physical properties of the wires, strands or cords will influence the strength of the metallic element.

It is clear that all metallic elements have an undulated structure, or have a rough structure, which improves the mechanical anchoring of the polymer material round the metallic element.

## Claims

1. A reinforcing structure, comprising one or more textile fabrics, at least one of said textile fabrics comprising metallic elements, said metallic elements are metallic wires, bundles of metallic wires, metallic strands or metallic cords, said metallic elements have a textile deformation, **characterized in that** said metallic elements have at least one structural deformation, other than said textile deformation.

2. A reinforcing structure as in claim 1, where said metallic element has 2 structural deformations.

3. A reinforcing structure as in claim 1 or 2, where at least one of said structural deformation is an undulation.

4. A reinforcing structure as in claim 1 or 2, where at least one of said structural deformation is a spirally shaped structural deformation.

5. A reinforcing structure as in claim 1 or 2, said structural deformations are undulations.

6. A reinforcing structure as in claim 5, wherein said undulations are comprised in one plane, parallel to the axis of said metallic element.

7. A reinforcing structure as in claim 5, wherein said undulations are comprised in different planes, said planes are parallel to the axis of said metallic element.

8. A reinforcing structure as in claim 1 to 7 wherein said metallic element is a wire.

9. A reinforcing structure as in claim 1 to 7 wherein said metallic element is a cord.

10. A reinforcing structure as in claim 1 to 9, where said metallic element has an elongation at rupture of more than 3%.

11. A reinforcing structure as in claim 1 to 10, where said metallic element has an elongation of more than 0.3% at a force of 10% compared to the force at rupture of said metallic element.

12. A reinforcing structure as in claim 1 to 11, said textile fabric is a knitted fabric.

13. A reinforcing structure as in claim 1 to 11, said textile fabric is a woven fabric.

14. A reinforcing structure as in claim 13, said metallic elements are present in both warp and weft of said woven textile fabric.

15. The use of a reinforcing structure as in claim 1 to 14, for reinforcing a stiff composite article, said stiff composite article further comprising a polymer matrix having a Young's modulus of more than 10⁷ Pa.

16. A stiff composite article comprising a polymer matrix and a reinforcing structure according to any one of the claims 1 to 14, said polymer matrix having a Young's modulus of more than 10⁷ Pa.

17. A method of manufacturing a stiff composite article comprising following steps:
- Providing a reinforcing structure as in claim 1 to 14 and a polymer matrix having a Young's modulus of more than 10⁷ Pa.
- Forming said stiff composite article by applying heat and/or pressure to said reinforcing structure and polymer matrix.

## Patentansprüche

1. Verstärkungsstruktur enthaltende einem oder mehreren Textilgeweben, wobei zumindest eines der Textilgewebe metallische Elemente enthält, die Metalldrähte, Bündel aus Metalldrähten, Metalllitzen oder Metallseile sind und eine Textildeformation aufweisen, **dadurch gekennzeichnet, dass** die metallischen Elemente zumindest eine von der Textildeformation verschiedene strukturelle Deformation aufweisen.

2. Verstärkungsstruktur nach Anspruch 1, wobei das metallische Element 2 strukturelle Deformationen aufweist.

3. Verstärkungsstruktur nach Anspruch 1 oder 2, wobei zumindest eine der strukturellen Deformationen eine Wellenform ist.

4. Verstärkungsstruktur nach Anspruch 1 oder 2, wobei zumindest eine der strukturellen Deformationen eine spiralförmig geformte strukturelle Verformung ist.

5. Verstärkungsstruktur nach Anspruch 1 oder 2, wobei die strukturellen Deformationen Wellenformen sind.

6. Verstärkungsstruktur nach Anspruch 5, wobei die Wellenformen in einer zu der Achse des metallischen Elements parallelen Ebene liegen.

7. Verstärkungsstruktur nach Anspruch 5, wobei die Wellenformen in verschiedenen Ebenen liegen, die parallel zu der Achse des metallischen Elements sind.

8. Verstärkungsstruktur nach Anspruch 1 bis 7, wobei das metallische Element ein Draht ist.

9. Verstärkungsstruktur nach Anspruch 1 bis 7, wobei das metallische Element ein Seil ist.

10. Verstärkungsstruktur nach Anspruch 1 bis 9, wobei das metallische Element eine Bruchdehnung von mehr als 3 % aufweist.

11. Verstärkungsstruktur nach Anspruch 1 bis 10, wobei das metallische Element eine Dehnung von mehr als 0,3 % bei einer Kraft von 10 % im Vergleich zu der Bruchkraft des metallischen Elements hat.

12. Verstärkungsstruktur nach Anspruch 1 bis 11, wobei das Textilgewebe ein Strichware ist.

13. Verstärkungsstruktur nach Anspruch 1 bis 11, wobei das Textilgewebe ein gewobenes Gewebe ist.

14. Verstärkungsstruktur nach Anspruch 13, wobei die metallischen Elemente sowohl in der Kette als auch dem Schuss des gewobenen Textilgewebes vorliegen.

15. Verwendung einer Verstärkungsstruktur nach Anspruch 1 bis 14 zur Verstärkung eines steifen Verbundbauteils, wobei das steife Verbundbauteil weiterhin eine Polymermatrix mit einem Youngscher Modul von mehr als 10⁷ Pa umfasst.

16. Steifes Verbundbauteil mit einer Polymermatrix und einer Verstärkungsstruktur nach einem der Ansprüche 1 bis 14, wobei die Polymermatrix ein Youngscher Modul von mehr als 10⁷ Pa besitzt.

17. Verfahren zur Herstellung eines steifen Verbundbauteils mit den folgenden Schritten :
- Bereitstellen einer Verstärkungsstruktur nach Anspruch 1 bis 14 und einer Polymermatrix mit einem Youngscher Modul von mehr als 10⁷ Pa,
- Ausbilden des steifen Verbundbauteils durch Beaufschlagen der Verstärkungsstruktur und der Polymermatrix mit Wärme und/oder Druck.

## Revendications

1. Structure de renforcement, comprenant un ou plusieurs tissus textiles, au moins un desdits tissus textiles comprenant des éléments métalliques, lesdits éléments métalliques étant des fils métalliques, des faisceaux de fils métalliques, des torons métalliques ou des câbles métalliques, lesdits éléments métalliques présentant une déformation textile, **caractérisée en ce que** lesdits éléments métalliques présentent au moins une déformation structurelle autre que ladite déformation textile.

2. Structure de renforcement suivant la revendication 1, dans laquelle ledit élément métallique présente deux déformations structurelles.

3. Structure de renforcement suivant la revendication 1 ou 2, dans laquelle au moins une desdites déformations structurelles est une ondulation.

4. Structure de renforcement suivant la revendication 1 ou 2, dans laquelle au moins une desdites déformations structurelles est une déformation structurelle de forme spirale.

5. Structure de renforcement suivant la revendication 1 ou 2, dans laquelle lesdites déformations structurelles sont des ondulations.

6. Structure de renforcement suivant la revendication 5, dans laquelle lesdites ondulations sont comprises dans un seul plan parallèle à l'axe dudit élément métallique.

7. Structure de renforcement suivant la revendication 5, dans laquelle lesdites ondulations sont comprises dans différents plans, lesdits plans étant parallèles à l'axe dudit élément métallique.

8. Structure de renforcement suivant les revendications 1 à 7, dans laquelle ledit élément métallique est un fil.

9. Structure de renforcement suivant les revendications 1 à 7, dans laquelle ledit élément métallique est un câble.

10. Structure de renforcement suivant les revendications 1 à 9, dans laquelle ledit élément métallique présente un allongement à la rupture supérieur à 3 %.

11. Structure de renforcement suivant les revendications 1 à 10, dans laquelle ledit élément métallique présente un allongement supérieur à 0,3 % sous une force de 10 % comparativement à la force à la rupture dudit élément métallique.

12. Structure de renforcement suivant les revendications 1 à 11, dans laquelle ledit tissu textile est un tissu tricoté.

13. Structure de renforcement suivant les revendications 1 à 11, dans laquelle ledit tissu textile est un tissu tissé.

14. Structure de renforcement suivant la revendications 13, dans laquelle lesdits éléments métalliques sont présents à la fois dans la chaîne et dans la trame dudit tissu textile tissé.

15. Utilisation d'une structure de renforcement suivant les revendications 1 à 14 pour renforcer un article composite rigide, ledit article composite rigide comprenant en outre une matrice polymère présentant un module de Young supérieur à 10⁷ Pa.

16. Article composite rigide comprenant une matrice polymère et une structure de renforcement suivant l'une quelconque des revendications 1 à 14, ladite matrice polymère présentant un module de Young supérieur à 10⁷ Pa.

17. Procédé de fabrication d'un article composite rigide, comprenant les étapes suivantes :
- la fourniture d'une structure de renforcement suivant les revendications 1 à 14 ainsi que d'une matrice polymère présentant un module de Young supérieur à 10⁷ Pa ;
- le formage dudit article composite rigide en appliquant une chaleur et/ou une pression à ladite structure de renforcement et à ladite matrice polymère.
